# FASCICULE DE BREVET EUROPEEN

(11) **EP 3 853 087 B1**
(45) Date de publication et mention de la délivrance du brevet: **08.11.2023**
(21) Numéro de dépôt: 19820839.9
(22) Date de dépôt: 08.11.2019
(51) Int. Cl.: B60T 8/174

(54) **PROCEDE DE FABRICATION D'UN SYSTÈME DE FREINAGE D'UN VEHICULE AYANT RECOURS A DE LA LOGIQUE FLOUE**
VERFAHREN ZUR HERSTELLUNG EINES BREMSSYSTEMS EINES FAHRZEUGS UNTER VERWENDUNG VON FUZZY-LOGIK
METHOD FOR MANUFACTURING A BRAKING SYSTEM OF A VEHICLE MAKING USE OF FUZZY LOGIC

(30) Priorité: 12.11.2018 FR 1860438
(43) Date de publication de la demande: 28.07.2021
(73) Titulaire: Hitachi Astemo France, 93700 Drancy (FR)
(72) Inventeur: HURWIC, Aleksander, 75020 Paris (FR)
(74) Mandataire: Brevalex
(86) Numéro de dépôt international: PCT/FR2019/052673
(87) Numéro de publication internationale: WO 2020/099767

(56) Documents cités:
- EP-A1- 1 876 077
- EP-A1- 2 045 155
- WO-A1-2017/175108
- WO-A2-2018/182554
- GB-A- 2 471 940
- US-A1- 2012 280 562

## Description

La présente invention se rapporte à un procédé de fabrication d'un système de freinage d'un véhicule ayant recours à de la logique floue.

Les systèmes de freinage considérés ici comprennent une partie mécanique, responsable du freinage physique, et une partie de commande contenant des consignes ou codes de freinage, qu'on peut souvent représenter par des fonctions de pression du liquide de freinage ou de décélération d'un moteur électrique en fonction du temps. Ces consignes sont appliquées par un calculateur, lui aussi embarqué sur le véhicule. L'application de la consigne de freinage choisie en fonction des circonstances du freinage se fait en temps réel. Les consignes sont enregistrées dans une mémoire du calculateur, qui peut être dédié au système de freinage ou au contraire servir aussi à d'autres fonctions, tel qu'un calculateur ESP (marque déposée), qui s'occupe de modulations des commandes de trajectoire, ou un calculateur sur le bus CAN du véhicule (pompe, amplificateur de freinage, générateur électrique de pression, etc.), entre autres exemples.

Le frein peut être de tout genre, y compris un frein de stationnement, qu'on peut utiliser sur route pour un freinage de secours ; et de toute nature (mécanique à disque ou tambour et pression de fluide, ou électrochimique à récupération d'énergie électrique par une batterie, le freinage revenant alors à une décélération imposée à un moteur électrique). Et le véhicule peut lui aussi être de tout genre (notamment à moteur à combustion interne, électrique, ou hybride).

L'invention a été conçue pour améliorer les consignes de freinage obtenues par les procédés habituels et obtenir des freinages plus efficaces selon les circonstances effectivement rencontrées, en s'efforçant de prendre en compte de façon appropriée autant des très nombreux paramètres qui participent au freinage que possible, mais dont l'influence peut être difficile à évaluer.

L'invention se distingue des procédés tels que ceux qui sont décrits dans EP 2045155 A1 ou EP 1876077 A1, où des consignes de freinage sont élaborées en utilisant de la logique floue, en fonction de divers paramètres associés au véhicule, à son mouvement ou éventuellement son environnement, mais en temps réel, c'est-à-dire pendant un freinage effectif, et ces consignes sont appliquées immédiatement. Comme indiqué plus haut, les consignes qui sont le sujet de cette invention-ci sont enregistrées dans une mémoire de calculateur.

Toutefois, hors de cas très simples, les processus de formation des résultats en logique floue échappent à l'observateur et la qualité de leurs résultats ne peut pas être garantie, ce qui est pourtant indispensable dans cette application où la sécurité est primordiale ; les consignes issues de la logique floue ne sont donc pas fiables en elles-mêmes. Dans les documents ci-dessus, il est prévu que la consigne peut être modifiée à tout instant en fonction des résultats de freinage. On désirerait pourtant disposer de consignes de freinage éprouvées, sans risquer de devoir s'imposer une correction pendant le processus même d'un freinage.

Le procédé de fabrication du système de freinage de l'invention, qui fait pourtant appel à la logique floue pour l'élaboration de consignes de freinage immuables dans un calculateur de commande du frein, comprend alors trois étapes principales :
- génération de consignes de freinage candidates sur un dispositif équipé d'un processeur de logique floue en fonction d'un premier jeu de paramètres de situations de freinage ;
- validation ou rejet des consignes de freinage candidates en appliquant au moins un algorithme de décision par un dispositif de calcul algorithmique, l'algorithme de décision comprenant une vérification d'exigences réglementaires, techniques et/ou associées à un conducteur, et/ou comprend une analyse de résultats d'application des consignes candidates à des simulations de situations de freinage exprimées par un second jeu de paramètres ;
- implantation des consignes de freinage candidates qui ont été validées sur le calculateur de la partie de commande.

L'étape de validation complète donc l'étape préliminaire de génération des consignes en apportant la sécurité d'un algorithme de décision parfaitement maîtrisé par le concepteur. Les validations pourront consister en des vérifications de normes ou d'exigences réglementaires de sécurité par exemple, ou se fonder sur des simulations de situations de freinage en faisant appel éventuellement à un second jeu de paramètres, pouvant comprendre des paramètres déjà présents dans le premier jeu. Elles seraient souvent impossibles à accomplir en temps réel si les paramètres de validation ne sont pas modélisables ou si les paramètres du second jeu ne sont pas mesurés dans le véhicule.

Le processeur de logique floue peut avantageusement comporter un réseau de neurones.

Un avantage de la logique floue est qu'elle se prête bien à des techniques d'auto-apprentissage, qui pourront être utilisées ici selon les résultats de validation ou de rejet des consignes candidates obtenues à la deuxième étape.

Selon divers modes de réalisation possibles de l'invention, le premier jeu de paramètres peut comprendre tout ou partie des paramètres suivants : de modèles du véhicule ou du système de freinage ; de mouvements du véhicule ; d'environnement extérieur du véhicule ; d'état de divers constituants du véhicule hors du système de freinage ; d'historique de conduite ou de freinage ; de commande de freinage ou de style de conduite ; ou d'allocation ou de répartition de ressources énergétiques entre le système de freinage et d'autres systèmes du véhicule, quand ils sont en compétition pour elles.

Il est souvent avantageux de répéter la validation avec des variations successives des paramètres du second jeu dans des plages de simulations, afin d'accroître la sûreté de validation et de les rendre mieux exhaustives des différentes situations plausibles de freinage.

L'algorithme de décision peut aussi comprendre des détections de problèmes et/ou valeurs de mesure de capteurs apparaissant sur le véhicule hors du système de freinage après avoir appliqué les consignes candidates.

Il peut encore comprendre une étape d'auto-apprentissage, consistant en des réévaluations de consignes précédemment validées, en cas de rejet d'une consigne candidate jugée comme similaire auxdites consignes précédemment validées. La comparaison/classification des exemples de situation de freinage s'effectue de préférence par un réseau neuronal, de préférence comportant au moins trois couches de neurones et de manière encore préférée comportant un nombre de couches élevé (deep learning en terminologie anglo-saxonne).

Selon un aspect particulier de l'invention, les étapes principales du procédé sont :
- génération en laboratoire de consignes de freinage candidates sur un dispositif, simulateur de freinage ou calculateur, équipé d'un processeur de logique floue en fonction d'un premier jeu de paramètres de situations de freinage ;
- validation ou rejet des consignes de freinage candidates en appliquant au moins un algorithme de décision par un dispositif de calcul algorithmique, l'algorithme de décision comprenant une vérification analytique d'exigences réglementaires, techniques et/ou associées à un conducteur, et/ou une analyse de résultats d'application des consignes candidates à des simulations de situations de freinage exprimées par un second jeu de paramètres ;
- les consignes de freinage inscrites dans ladite mémoire du calculateur de la partie de commande étant les consignes de freinage candidates qui ont été validées.

Un autre aspect de l'invention est un véhicule comprenant un système de freinage fabriqué selon ce qui précède.

Les différents aspects, caractéristiques et avantages de l'invention seront maintenant décrits plus en détail en s'appuyant sur les figures suivantes, données à titre purement illustratif pour décrire certaines réalisations ou variantes de réalisations possibles de celle-là :
- la figure 1 représente le procédé de fabrication du système de freinage ;
- la figure 2 illustre un réseau de neurones ;
- les figures 3, 4, 5, 6 et 7 illustrent certains algorithmes de validation des consignes candidates ;
- et la figure 8 représente le dispositif utilisé et les interactions entre ses constituants.

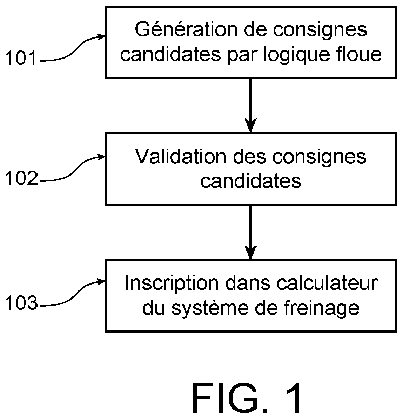

Le procédé conforme à l'invention comprend trois étapes principales représentées à la figure 1.

La première étape 101 est une génération de consignes ou de codes de freinage au moyen d'un algorithme de logique floue.

La deuxième étape 102 est une étape de validation des consignes produites par la première étape 101 et dites consignes candidates.

La troisième étape 103 est une implantation des consignes validées à la deuxième étape 102 sur un calculateur de véhicule, chargé de commander le système de freinage.

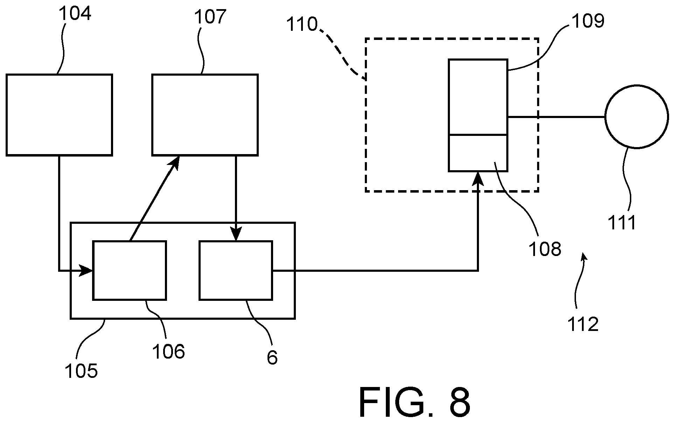

D'après la figure 8, la première étape 101 est accomplie sur un dispositif 104 de calculateur équipé d'un processeur permettant d'accomplir des opérations en logique floue. Ses résultats sont transmis à un dispositif de stockage 105 contenant une base de données 106 de consignes candidates et une base de données 6 de consignes validées, et ils sont inscrits comme consignes candidates dans la première de ces bases de données.

Le dispositif de stockage est ensuite apporté à un dispositif 107, éventuellement distinct du précédent, qui effectue des calculs algorithmiques de validation des consignes candidates et les transcrit dans la base de données 6 après les avoir validées. L'opérateur pourra alors inscrire le contenu de la base de données 6 dans une mémoire 108 d'un calculateur 109 d'une partie de commande 110 d'un système de freinage 112, comprenant encore une partie mécanique 111 régie par la partie de commande 110. Le système de freinage et le frein lui-même seront ensuite montés sur un véhicule.

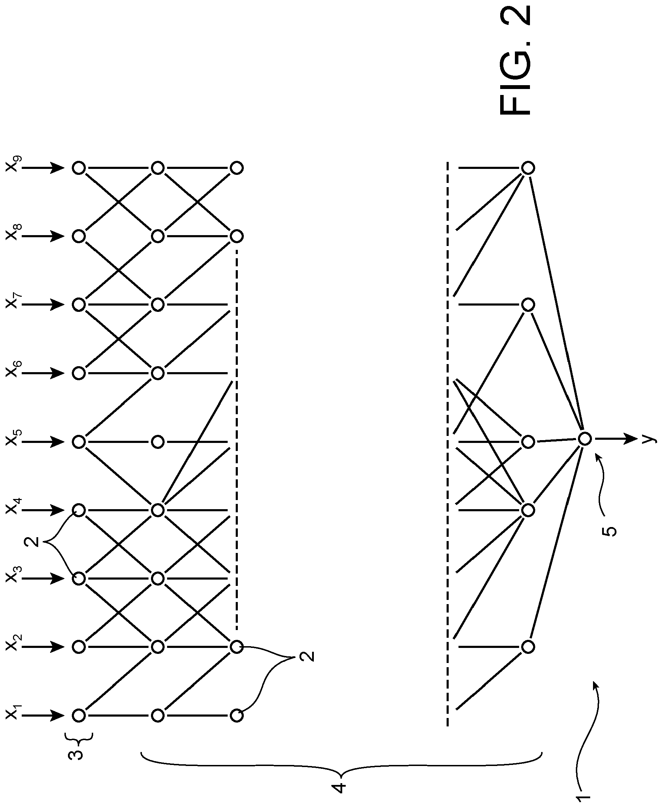

La première étape 101 est menée en laboratoire ou en usine sur un simulateur de freinage ou un simple calculateur équipé d'un réseau 1 de neurones 2 qu'on décrira succinctement au moyen de la figure 2. Des paramètres d'un premier jeu, prenant des valeurs notées xᵢ, sont fournis à des neurones 2 d'une couche d'entrée 3 du réseau 1. Les neurones 2 sont, d'une manière générale, des processeurs logiques aptes à traiter les signaux d'entrée qu'ils reçoivent et à transmettre des signaux de sortie correspondant aux processus logiques à d'autres neurones 2, appartenant en principe à des couches suivantes du réseau 1, dite couches intermédiaires 4, et qui combinent les signaux de sortie des neurones 2 des couches précédentes de diverses manières. De manière typique, mais non limitative, les processus faits par les neurones 2 de la couche d'entrée 3 peuvent comprendre des pondérations par des coefficients numériques ou des discriminations d'après des valeurs de seuil, et les combinaisons peuvent comprendre des opérations logiques (ET, OU, etc.), des combinaisons numériques, ou autres. Les réseaux 1 de neurones peuvent comporter autant de couches intermédiaires 4 de neurones 2 que nécessaire, qui combinent les signaux de sortie des couches précédentes suivant le même principe, par exemple entre 3 et 1 000 couches, de préférence entre 30 et 100 couches, par exemple 80 couches. Le nombre de couches dépend de la puissance de calcul disponible et de la complexité des données à traiter. Ils comprennent une couche de sortie 5, pouvant comprendre ici un seul neurone 2, dont le signal de sortie y correspond à la consigne de freinage candidate, c'est-à-dire une fonction de pression de fluide de freinage pour un système de freinage hydraulique, ou le courant de commande d'un moteur électrique pour un système de freinage électrique, ou plus généralement de force de freinage, à appliquer au frein en fonction du temps. En variante, la sortie comporte un nombre de neurones 2 égal ou sensiblement égal au nombre de bits du bus de commande (sortie) d'un calculateur du système de freinage sur lequel le logiciel de freinage doit être implémenté. Par exemple, la dernière couche de neurones 2 comprend alors 8, 16, 32, 64 ou 128 neurones.

Les paramètres du premiers jeu peuvent comprendre certaines au moins des indications :
- x₁ du modèle du véhicule (poids, dimensions, caractéristiques des roues, etc.)
- x₂ du modèle du frein ou de sa nature (sur roue avant ou arrière, frein de conduite normal ou frein de stationnement ; ce dernier est typiquement commandé à une intensité de freinage conventionnelle),
- x₃ de commande de freinage et notamment d'actionnement sur la pédale de frein (force, brusquerie, durée, etc.) ; ou d'actionnement du levier d'un frein de stationnement, pour faire participer celui-ci à un freinage d'urgence ou de secours, éventuellement,
- x₄ de mouvement du véhicule (vitesse sur route ou vitesse de rotation des roues, accélération, braquage du volant, angle de lacet, etc.),
- x₅ d'environnement extérieur (température, adhérence sur route, localisation du véhicule pour corriger une vitesse excessive, etc.) donnant des indications du milieu extérieur, du véhicule ou de leur interaction,
- x₆ de tout capteur d'état du véhicule, y compris du système de freinage (pression des pneus, niveau de liquide de frein, usure des freins, tension ou charge de la batterie, etc.),
- x₇ de répartition et de gestion des ressources d'énergie immédiatement disponibles pour commander le véhicule, pour éventuellement les modifier au profit du processus de freinage ; ce dernier aura en effet priorité sur d'autres systèmes, comme l'amortissement, pour l'allocation de pression d'huile ; un autre cas important est celui des véhicules électriques ou hybrides à freinage régénératif, où le freinage doit être adapté au moteur électrique ou à l'alternateur utilisé pour décélérer,
- x₈ d'historique de conduite ou de freinage pour tenir compte d'événements passés (freinages immédiatement précédents ou autres paramètres de conduite qui peuvent donner une indication sur l'état de la route ou nécessiter une application d'anti-blocage (ABS) par exemple, et aussi permettre d'évaluer la température du frein ou celle de l'alternateur responsable de la décélération,
- x₉ de style de freinage ou de conduite (freinage fin, progressif ou brusque, caractéristiques du conducteur ou ses préférences pour une conduite confortable ou au contraire nerveuse, etc.). De même, les caractéristiques de freinage effectif particulièrement efficaces, de préférence classées, par exemple en freinage de confort, freinage d'urgence, ralentissement, arrêt, freinage d'urgence, sont présentées au réseau 1 de neurones pour bénéficier de ses capacités d'auto-apprentissage.

Tous les paramètres envisageables pourront être introduits dans le réseau 1 et pris en compte de diverses manières très différentes, ce qui justifie l'intérêt de ce processus. On pourra notamment recourir à tout capteur présent sur le véhicule et apte à fournir un signal au calculateur associé au freinage. Les couches intermédiaires 4 du réseau 1 façonnent peu à peu les consignes candidates y.

Les consignes pourront être obtenues soit pour les freins habituellement chargés du freinage, soit pour le frein de stationnement, pour lui faire assurer soit sa fonction normale comme les autres freins à vitesse importante du véhicule, soit le faire participer à un freinage de secours à faible vitesse du véhicule, qui indique une situation de stationnement et d'arrêt.

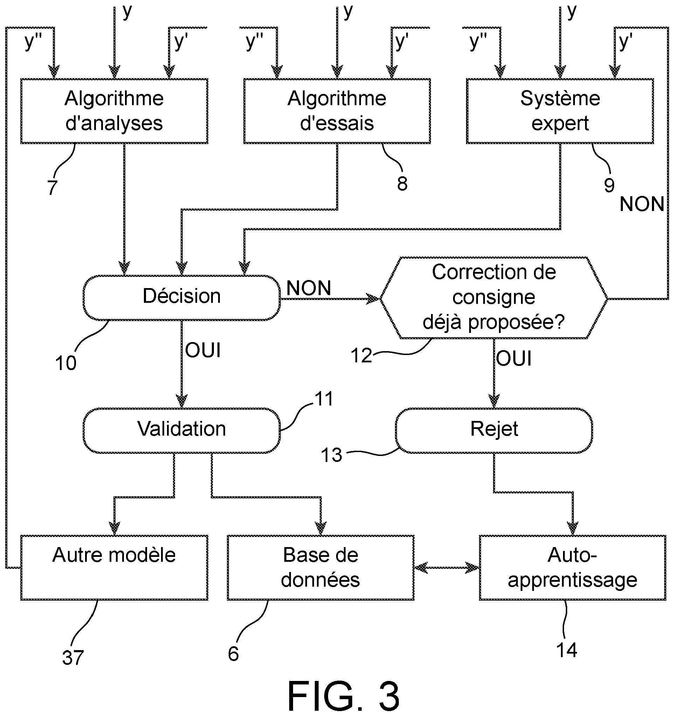

La deuxième étape 102 du procédé de la figure 1 est relative à la validation des consignes candidates obtenues d'après ce qui précède. Elle s'effectue aussi, comme la première étape 101, en usine ou en laboratoire. Chaque consigne candidate y obtenue précédemment peut être validée de plusieurs manières, qu'on peut d'ailleurs cumuler entre elles, ce qui est représenté à la figure 3. Les modes de validation sont de nature algorithmique et peuvent comprendre des algorithmes d'analyse 7, des algorithmes d'essai 8 et des algorithmes de système expert 9. Les résultats de ces différents algorithmes sont fournis à un module de décision 10 qui peut produire une décision de validation 11 (en principe si les résultats de tous les algorithmes sont favorables) ou au contraire une décision de rejet 13. Cette dernière peut toutefois être précédée d'une étape de tentative de correction 12 de la consigne candidate y, qu'on refait ensuite repasser sous forme de consigne corrigée y' au moins par les algorithmes 7, 8 et 9 où la consigne a échoué avant correction. En cas de nouvel échec par le module de décision 10, le rejet 13 est définitif.

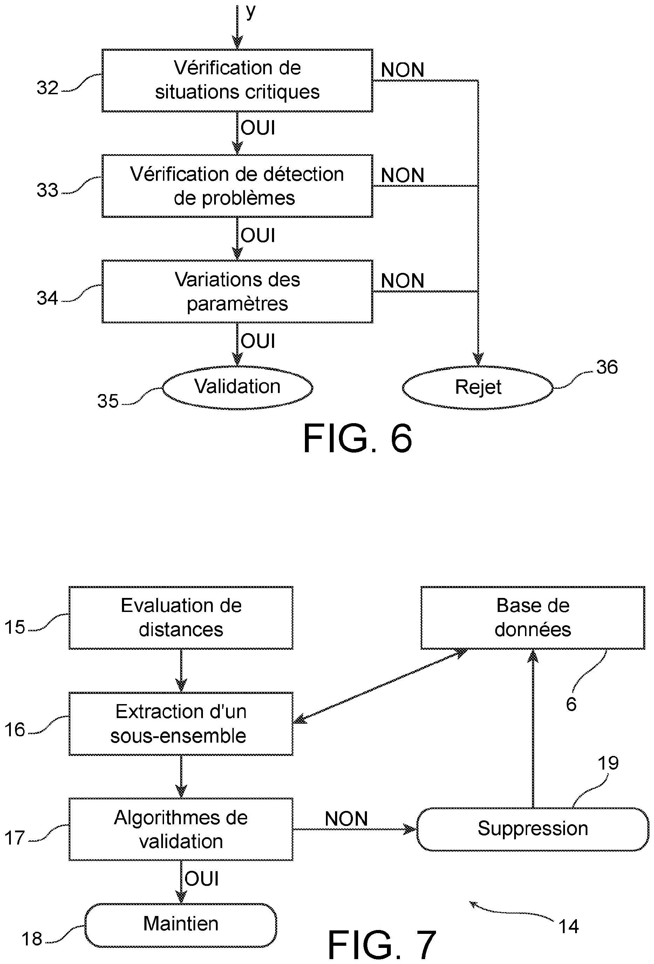

Il est à noter qu'un auto-apprentissage 14 peut également être pratiqué en cas de rejet. Il peut consister en les opérations résumées à la figure 7 : on recherche les consignes validées précédemment, et enregistrées dans une base de données 6, qui sont analogues à la consigne y qu'on vient de rejeter, par des calculs de similitude ou de distance mathématiques (étape 15) ; on extrait le cas échéant un sous-ensemble des consignes de la base de données 6 dont les similitudes avec la consigne rejetée sont suffisantes (étape 16) ; les consignes du sous-ensemble sont à nouveau soumises aux algorithmes de validation 7, 8 et 9 (étape 17) ; elles sont maintenues dans la base de données 6 en cas de renouvellement de la validation (étape 18) ou retirées de la base de données 6 sinon (étape 19).

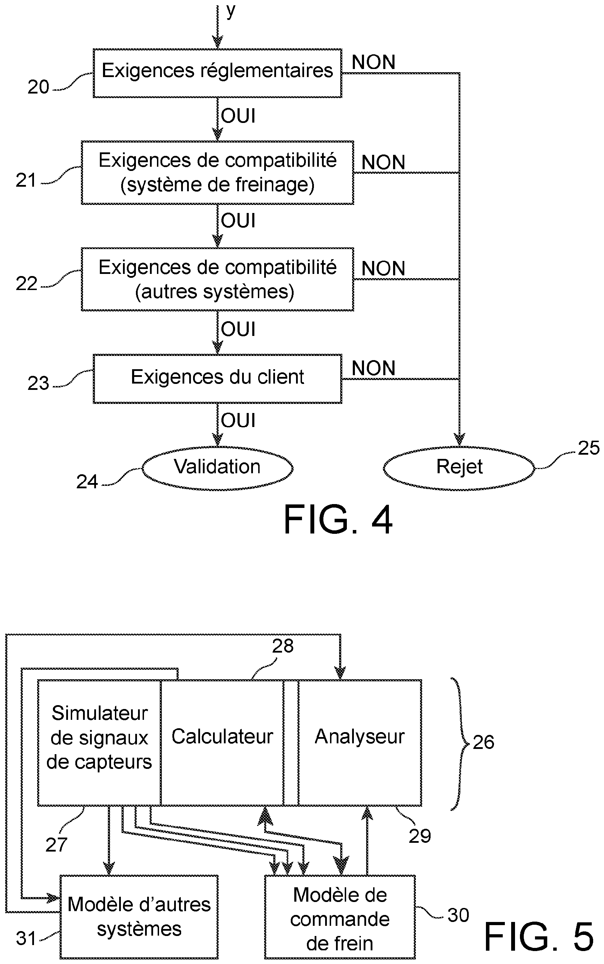

On passe au commentaire de la figure 4 pour détailler un algorithme d'analyse 7. La consigne candidate y est vérifiée successivement selon divers critères, comme des exigences réglementaires ou des normes (étape 20), des exigences techniques de compatibilité avec le système de freinage (étape 21) ou des exigences d'interaction avec les autres systèmes (allocation des ressources, etc.) (étape 22), et des exigences ou attentes des clients, sur le style de freinage souhaité par exemple (étape 23). Si la consigne candidate y traverse ces examens avec succès, elle est validée (étape 24), ou rejetée sinon (étape 25). Ces différentes exigences peuvent être vérifiées dans un ordre quelconque, étant indépendantes les unes des autres, et elles peuvent être complétées par d'autres vérifications.

Un algorithme d'essai 8 par simulation de situations de freinage peut appliquer la consigne candidate y à un modèle du système en même temps que des signaux représentatifs d'un second jeu de paramètres du véhicule ou de son environnement, qui caractérisent certaines situations de freinage jugées comme importantes. Le second jeu de paramètres peut comprendre ou non des paramètres déjà présents dans le premier jeu, utilisé dans l'étape précédente 101. Ces paramètres du second jeu peuvent encore être représentatifs de signaux de capteurs présents dans le véhicule, ou d'autres indications. On cherche à être exhaustif, c'est-à-dire à recréer toutes les situations plausibles ou possibles.

La description d'un algorithme à système expert 9 sera maintenant donnée au moyen de la figure 5. Le système expert 26 proprement dit comprend un simulateur de signaux de capteurs 27 du véhicule, un calculateur 28 et un analyseur 29, et il interagit avec un modèle de commande de frein 30 et des modèles d'autres systèmes 31 du véhicule, qui sont typiquement des systèmes interagissant avec le système de freinage. Le simulateur de signaux de capteurs 27 et le calculateur 28 fournissent leurs signaux de sortie au modèle de commande de frein 30 et au modèle d'autres systèmes 31. Et le modèle de commande de frein 30, qui est soit le dispositif physique lui-même, soit une simulation de ce dispositif sur un ordinateur, fournit des signaux représentatifs du freinage au calculateur 28 et à l'analyseur 29.

Le calculateur 28 peut transmettre notamment la consigne ou une succession de consignes candidates y au modèle de commande de frein 30 pour simuler une situation de freinage, qui est aussi définie par le simulateur de signaux de capteurs 27. Les résultats du modèle de commande de frein 30 fournis au calculateur 28 permettent d'ajuster la consigne de freinage et l'analyseur 29 vérifie que le freinage est satisfaisant. Le modèle des autres systèmes 31 indique si le freinage se déroule de façon satisfaisante pour ces derniers aussi.

Le procédé peut comprendre les étapes principales suivantes, représentées à la figure 6. On peut procéder d'abord à une vérification de situations critiques (étape 32), représentées par des valeurs particulières fournies par le simulateur de signaux de capteur 27 et le calculateur 28. Si l'analyseur 29 conclut que le freinage est satisfaisant, on peut alors procéder à une vérification de problèmes détectés par le modèle des autres systèmes 31, et qui peuvent être des excès de freinage menant à une surchauffe, ou une instabilité de trajectoire par exemple (étape 33). Enfin, une dernière vérification importante peut comprendre des variations de paramètres (étape 34), c'est-à-dire que le procédé est répété avec des valeurs différentes des signaux fournis par le simulateur 27 dans les plages de valeurs que ces signaux peuvent prendre. Le choix de ces valeurs différentes peut être aléatoire, ou guidé par des détections de problèmes potentiels par l'analyseur 29 ou le modèle 31. Si les vérifications sont toutes concluantes, une validation de la consigne candidate y est encore faite, sinon un rejet (étape 35 ou 36). Comme avec l'algorithme d'essais 8, on procède ici à des simulations de situations de freinage, mais avec une interactivité entre le calculateur et le modèle de commande du frein, et une mesure d'influence sur d'autres systèmes.

Cette deuxième étape 102 principale du procédé peut être rendue plus efficace en appliquant aussi les consignes candidates y à d'autres modèles de véhicule ou de système de freinage (étape 37 de la figure 3) une fois qu'elles sont validées. Les algorithmes 7, 8 et 9 seront recommencés pour ces autres modèles. Les consignes correspondantes, notées y", pourront toutefois être identiques aux consignes y juste validées. Il est bien entendu que la mise en oeuvre de validation/détection des erreurs dans les logiciels de freinage élaborés sans mise en oeuvre de logique floue (écriture du programme par un opérateur humain, avantageusement utilisant un atelier logiciel) ou par une logique algorithmique par le système expert des figures 5 et/ou 6 ne sort pas du cadre de la présente invention.

La troisième étape 103 principale du procédé consiste en une inscription (« flash ») des consignes de freinage validées dans la mémoire du calculateur associée au système de freinage. Cette étape n'implique pas de difficulté particulière puisqu'elle ne diffère pas des inscriptions de consignes déjà pratiquées pour les systèmes de freinage à commande numérique (brake by wire en terminologie anglo-saxonne).

Quand le système de freinage a été équipé des consignes dûment validées, il peut être monté sur un véhicule.

On espère donc obtenir des freinages plus efficaces, grâce à la logique floue, qui permet de traiter un nombre presque illimité de paramètres d'entrée, et à l'auto-apprentissage, et tout aussi sûrs qu'avec des procédés actuels, grâce à la validation rigoureuse de la deuxième étape, en appliquant l'invention.

L'invention s'applique aux systèmes de freinage avec un conducteur humain ainsi qu'aux systèmes de freinage assisté par des détecteurs et calculateurs et aux systèmes de freinage des véhicules autonomes.

### NOMENCLATURE

- 1: Réseau de neurones
- 2: Neurone
- 3: Couche d'entrée
- 4: Couches intermédiaires
- 5: Couche de sortie
- 6: Base de données
- 7: Algorithme d'analyses
- 8: Algorithme d'essais
- 9: Système expert
- 10: Décision
- 11: Validation
- 12: Correction de consigne déjà proposée ?
- 13: Rejet
- 14: Auto-apprentissage
- 15: Evaluation de distance
- 16: Extraction d'un sous-ensemble
- 17: Algorithmes de validation
- 18: Maintien
- 19: Suppression
- 20: Exigences réglementaires
- 21: Exigences de compatibilité (système de freinage)
- 22: Exigences de comptabilité (autres systèmes)
- 23: Exigences du client
- 24: Validation
- 25: Rejet
- 26: Système expert
- 27: Simulateur de signaux
- 28: Calculateur
- 29: Analyseur
- 30: Modèle de commande de frein
- 31: Modèle d'autres systèmes
- 32: Vérification de situations critiques
- 33: Vérification de détection de problèmes
- 34: Variations des paramètres
- 35: Validation
- 36: Rejet
- 37: Autres modèles
- 101: Première étape
- 102: Deuxième étape
- 103: Troisième étape
- 104: Dispositif à processeur de logique floue
- 105: Dispositif de stockage
- 106: Base de données de consignes candidates
- 107: Dispositif de validation algorithmique
- 108: Mémoire
- 109: Calculateur
- 110: Partie de commande de frein
- 111: Partie mécanique de frein
- 112: Système de freinage
- x₁ à x₉: Paramètres d'entrée
- y, y', y": Consignes candidates

## Revendications

1. Procédé de fabrication d'un système de freinage (112) pour un véhicule, comprenant une partie mécanique (111) et une partie de commande (110) dans laquelle un calculateur (109) applique en temps réel des consignes de freinage à la partie mécanique en fonction de signaux de commande fournis audit calculateur, comprenant les étapes suivantes :
- génération de consignes de freinage candidates (y) sur un dispositif équipé d'un processeur (104) de logique floue en fonction d'un premier jeu de paramètres (x) de situations de freinage ;
- validation ou rejet des consignes de freinage candidates (y) en appliquant au moins un algorithme de décision (7, 8, 9) par un dispositif (107) de calcul algorithmique, l'algorithme de décision (7) comprenant selon une première alternative une vérification d'exigences réglementaires (20), techniques (21, 22) et/ou associées à un conducteur (23), et/ou comprenant selon une seconde alternative une analyse de résultats d'application des consignes candidates à des simulations de situations de freinage exprimées par un second jeu de paramètres ;
- implantation des consignes de freinage candidates qui ont été validées sur le calculateur (109) de la partie de commande (110).

2. Procédé de fabrication d'un système de freinage (112) pour un véhicule selon la revendication 1, **caractérisé en ce que** le processeur de logique floue est un réseau (1) de neurones (2).

3. Procédé de fabrication d'un système de freinage selon l'une quelconque des revendications 1 ou 2, **caractérisé en ce que** le premier jeu de paramètres comprend des paramètres de modèle du véhicule et/ou du système de freinage (x₁, x₂).

4. Procédé de fabrication d'un système de freinage selon l'une quelconque des revendications 1 à 3, **caractérisé en ce que** le premier jeu de paramètres comprend des paramètres de commande de freinage (x₃).

5. Procédé de fabrication d'un système de freinage selon l'une quelconque des revendications 1 à 3, **caractérisé en ce que** le premier jeu de paramètres comprend des paramètres de mouvement du véhicule (x₄).

6. Procédé de fabrication d'un système de freinage selon l'une quelconque des revendications 1 à 3, **caractérisé en ce que** le premier jeu de paramètres comprend des paramètres d'état du véhicule et/ou d'environnement extérieur (x₅, x₆).

7. Procédé de fabrication d'un système de freinage selon l'une quelconque des revendications 1 à 6, **caractérisé en ce que** le premier jeu de paramètres comprend des paramètres d'allocation ou de répartition de ressources énergétiques entre le système de freinage et d'autres systèmes du véhicule (x₇).

8. Procédé de fabrication d'un système de freinage selon l'une quelconque des revendications 1 à 7, **caractérisé en ce que** le premier jeu de paramètres comprend un historique de conduite et/ou de freinage (x₈).

9. Procédé de fabrication d'un système de freinage selon l'une quelconque des revendications 1 à 8, **caractérisé en ce que** le premier jeu de paramètres comprend des paramètres de style de freinage et/ou de style de conduite (x₉).

10. Procédé de fabrication d'un système de freinage selon la
seconde alternative de la revendication 1, **caractérisé en ce qu'**il comprend des variations (34) des paramètres du second jeu dans des plages de simulation.

11. Procédé de fabrication d'un système de freinage selon l'une quelconque des revendications 1 à 10, **caractérisé en ce que** l'algorithme de décision comprend une détection de problèmes (33) apparaissant sur le véhicule hors du système de freinage après avoir appliqué les consignes candidates (y).

12. Procédé de fabrication d'un système de freinage selon l'une quelconque des revendications 1 à 11, **caractérisé en ce que** l'algorithme de décision comprend une étape d'auto-apprentissage (14), consistant en des réévaluations de consignes précédemment validées, en cas de rejet d'une consigne candidate jugée comme similaire auxdites consignes précédemment validées.

13. Véhicule, **caractérisé en ce qu'**il comporte un système de freinage fabriqué selon l'une quelconque des revendications précédentes et comprenant une mémoire dans laquelle sont inscrites les consignes de freinage validées.

## Patentansprüche

1. Verfahren zur Herstellung eines Bremssystems (112) für ein Fahrzeug, beinhaltend einen mechanischen Teil (111) und einen Steuerungsteil (110), wobei ein Rechner (109) in Abhängigkeit von Steuerungssignalen, die dem Rechner bereitgestellt werden, Bremssollwerte in Echtzeit auf den mechanischen Teil anwendet, beinhaltend die folgenden Schritte:
- Erzeugen von potentiellen Bremssollwerten (y) auf einer Vorrichtung, die mit einem Fuzzy-Logik-Prozessor (104) ausgerüstet ist, in Abhängigkeit von einem ersten Satz Parameter (x) von Bremssituationen;
- Validieren oder Ablehnen der potentiellen Bremssollwerte (y) durch Anwendung mindestens eines Entscheidungsalgorithmus (7, 8, 9) durch eine algorithmische Rechenvorrichtung (107), wobei der Entscheidungsalgorithmus (7) gemäß einer ersten Alternative eine Überprüfung von vorschriftsmäßigen (20), technischen (21, 22) und/oder mit einem Fahrer assoziierten (23) Anforderungen beinhaltet und/oder gemäß einer zweiten Alternative eine Analyse von Ergebnissen einer Anwendung der potentiellen Sollwerte auf Simulationen von Bremssituationen, die durch einen zweiten Satz Parameter ausgedrückt werden, beinhaltet;
- Einbringen der potentiellen Bremssollwerte, die validiert wurden, in den Rechner (109) des Steuerungsteils (110).

2. Verfahren zur Herstellung eines Bremssystems (112) für ein Fahrzeug nach Anspruch 1, **dadurch gekennzeichnet, dass** der Fuzzy-Logik-Prozessor ein Netzwerk (1) von Neuronen (2) ist.

3. Verfahren zur Herstellung eines Bremssystems nach einem beliebigen der Ansprüche 1 oder 2, **dadurch gekennzeichnet, dass** der erste Satz Parameter Modellparameter des Fahrzeugs und/oder des Bremssystems beinhaltet (x₁, x₂).

4. Verfahren zur Herstellung eines Bremssystems nach einem beliebigen der Ansprüche 1 bis 3, **dadurch gekennzeichnet, dass** der erste Satz Parameter Bremssteuerungsparameter beinhaltet (x₃).

5. Verfahren zur Herstellung eines Bremssystems nach einem beliebigen der Ansprüche 1 bis 3, **dadurch gekennzeichnet, dass** der erste Satz Parameter Bewegungsparameter des Fahrzeugs beinhaltet (x₄).

6. Verfahren zur Herstellung eines Bremssystems nach einem beliebigen der Ansprüche 1 bis 3, **dadurch gekennzeichnet, dass** der erste Satz Parameter Zustandsparameter des Fahrzeugs und/oder einer Außenumgebung beinhaltet (x₅, X₆).

7. Verfahren zur Herstellung eines Bremssystems nach einem beliebigen der Ansprüche 1 bis 6, **dadurch gekennzeichnet, dass** der erste Satz Parameter Parameter zur Zuweisung oder Verteilung von Energieressourcen zwischen dem Bremssystem und anderen Systemen des Fahrzeugs beinhaltet (x₇).

8. Verfahren zur Herstellung eines Bremssystems nach einem beliebigen der Ansprüche 1 bis 7, **dadurch gekennzeichnet, dass** der erste Satz Parameter einen Fahr- und/oder Bremsverlauf beinhaltet (x₈).

9. Verfahren zur Herstellung eines Bremssystems nach einem beliebigen der Ansprüche 1 bis 8, **dadurch gekennzeichnet, dass** der erste Satz Parameter Bremsstil- und/oder Fahrstilparameter beinhaltet (x₉).

10. Verfahren zur Herstellung eines Bremssystems gemäß der zweiten Alternative von Anspruch 1, **dadurch gekennzeichnet, dass** es Variationen (34) der Parameter des zweiten Satzes in Simulationsbereichen beinhaltet.

11. Verfahren zur Herstellung eines Bremssystems nach einem beliebigen der Ansprüche 1 bis 10, **dadurch gekennzeichnet, dass** der Entscheidungsalgorithmus eine Erkennung von Problemen (33), die nach der Anwendung der potentiellen Sollwerte (y) außerhalb des Bremssystems am Fahrzeug auftreten, beinhaltet.

12. Verfahren zur Herstellung eines Bremssystems nach einem beliebigen der Ansprüche 1 bis 11, **dadurch gekennzeichnet, dass** der Entscheidungsalgorithmus einen Schritt des Selbstlernens (14) beinhaltet, der aus erneuten Beurteilungen von zuvor validierten Sollwerten besteht, falls ein potentieller Sollwert, der als zu den zuvor validierten Sollwerten ähnlich eingestuft wird, abgelehnt wird.

13. Fahrzeug, **dadurch gekennzeichnet, dass** es ein Bremssystem umfasst, das gemäß einem beliebigen der vorhergehenden Ansprüche hergestellt wurde und einen Speicher beinhaltet, in dem die validierten Bremssollwerte gespeichert sind.

## Claims

1. A method for manufacturing a braking system (112) of a vehicle, comprising a mechanical part (111) and a control part (110) wherein a calculator (109) applies braking instructions in real time to the mechanical part according to control signals supplied to said calculator, comprising the following steps:
- generating candidate braking instructions (y) on a device equipped with a fuzzy logic processor (104) based on a first set of parameters (x) of braking situations;
- validating or rejecting the candidate braking instructions (y) by applying at least one decision algorithm (7, 8, 9) by an algorithmic calculation device (107), the decision algorithm (7) comprising according to a first alternative a verification of requirements which are regulatory (20), technical (21, 22) and/or associated with a driver (23), and/or comprising, according to a second alternative, an analysis of the results of application of candidate instructions to simulations of braking situations expressed by a second set of parameters;
- implementing the candidate braking instructions which have been validated on the calculator (109) of the control part (110).

2. The method for manufacturing a braking system (112) of a vehicle according to claim 1, **characterised in that** the fuzzy logic processor is a network (1) of neurons (2).

3. The method for manufacturing a braking system according to any one of claims 1 or 2, **characterised in that** the first set of parameters comprises the vehicle model and/or the braking system parameters (x₁, x₂).

4. The method for manufacturing a braking system according to any one of claims 1 to 3, **characterised in that** the first set of parameters comprises braking control parameters (x₃).

5. The method for manufacturing a braking system according to any one of claims 1 to 3, **characterised in that** the first set of parameters comprises vehicle movement parameters (x₄).

6. The method for manufacturing a braking system according to any one of claims 1 to 3, **characterised in that** the first set of parameters comprises vehicle state and/or external environment parameters (x₅, x₆).

7. The method for manufacturing a braking system according to any one of claims 1 to 6, **characterised in that** the first set of parameters comprises parameters of allocation or distribution of energy resources between the braking system and other vehicle systems (x₇).

8. The method for manufacturing a braking system according to any one of claims 1 to 7, **characterised in that** the first set of parameters comprises a driving and/or braking history (x₈).

9. The method for manufacturing a braking system according to any one of claims 1 to 8, **characterised in that** the first set of parameters comprises braking style and/or driving style parameters (x₉).

10. The method for manufacturing a braking system according to the second alternative of claim 1, **characterised in that** it comprises variations (34) of the parameters of the second set in simulation ranges.

11. The method for manufacturing a braking system according to any one of claims 1 to 10, **characterised in that** the decision algorithm comprises a detection of problems (33) appearing on the vehicle outside the braking system after having applied the candidate instructions (y).

12. The method for manufacturing a braking system according to any one of claims 1 to 11, **characterised in that** the decision algorithm comprises a self-learning step (14), consisting of re-evaluations of previously validated instructions, in the event of rejection of a candidate instruction judged to be similar to said previously validated instructions.

13. A vehicle, **characterised in that** it includes a braking system manufactured according to any one of the preceding claims and comprising a memory wherein the validated braking instructions are recorded.
